# EUROPEAN PATENT APPLICATION

(11) **EP 4 604 066 A1**
(43) Date of publication of application: **20.08.2025**
(21) Application number: 25157831.6
(22) Date of filing: 13.02.2025
(51) Int. Cl.: G06T 13/40

(54) **RETARGETING CHARACTER PARAMETERS TO SIMPLIFY STACK PROCESSING FOR DEVELOPING DIVERSE VIRTUAL ENVIRONMENTS**

(30) Priority: 13.02.2024 US 202463552790 P; 11.02.2025 US 202519051066
(71) Applicant: Autodesk, Inc., San Francisco, CA 94105 (US)
(72) Inventor: BAUR, Alain, San Francisco, 94105 (US); OUHLAL, Abdelhak, San Francisco, 94105 (US)
(74) Representative: Morrall, Jonathan Ian McLachlan

(57) **Abstract**

One embodiment sets forth a technique for retargeting character parameters to simplify stack processing for a 3D environment. According to some embodiments, the technique includes the steps of selecting a modifier to apply to characterization data for a character associated with a virtual environment; determining that a particular parameter, that is subject to modification upon an execution of the modifier, is unavailable for the character; determining that other characterization data for a separate character includes an available parameter that is modifiable according to the modifier; generating, for the particular character, updated characterization data that references the available parameter; modifying the updated characterization data according to the modifier; and causing the character to exhibit a transition according to the modifier while the character is being rendered via at least one user interface.

## Description

### CROSS-REFERENCE TO RELATED APPLICATIONS

The present application claims the benefit of U.S. Provisional Application titled, "NATURAL LANGUAGE STACK-BASED TRAVERSAL MODEL," filed on February 13, 2024, and having Serial No. 63/552,790. The subject matter of this related application is hereby incorporated herein by reference.

### BACKGROUND

### Field of the Various Embodiments

Embodiments of the present disclosure relate generally to computer science, virtual environments, and complex software applications, and, more specifically, to retargeting character parameters to simplify stack processing, especially when working with virtual objects of varying origins.

### Description of the Related Art

Computer-aided drafting applications demand excessive resources from most any device providing access to such applications, especially those tasked with creating and/or managing 3D virtual environments. For applications that facilitate the animation of 3D characters (e.g., animations depicting humans, animals, and/or other objects in complex environments), excessive memory consumption can plague performance and utility. In some instances, where animators and technical artists store numerous variations of similar animations simply to accommodate slight differences in character features, proportions, and/or structures, memory consumption and processing bandwidth can be especially limited. When affected animation clips must be re-created or duplicated for each variation, production pipelines can become cluttered with redundant data, further wasting available processing bandwidth and memory at critical design phases.

In some instances, significant resources can be wasted as a result of variations in bone structures amongst characters necessitating repeated modifications to character movements. For example, developers may attempt to fit an existing motion onto a character that does not align with a particular source skeleton, often resulting in the application requiring per-bone manual adjustments. These per-frame computations and manual edits can be especially taxing on available resources when they involve complex characters. Such practices may not be effective solutions, as they involve frequent periods of limited processing bandwidth, slowing down interactive playback and iterative refinement, and ultimately undermining the responsiveness required for large-scale or real-time productions.

Crowd scenes can present distinct technical obstacles because they may inherently involve excessive geometric computations. For instance, characters having custom skeleton definitions may force the application to simultaneously solve for multiple character definition mismatches and hierarchical constraints. This parallel processing of individually-defined skeletons can severely impact real-time engine performance and lead to excessive rendering overhead. Scenes with hundreds or thousands of characters can therefore become especially prone to stuttering, dropped frames, and increased rendering times.

Overall, many existing pipelines struggle to support real-time adjustments of characters, especially when confronted with factors such as user-driven character delineation. Without an efficient means for handling diverse character definitions and/or origins, systems must repeatedly compute, for example, per-bone transitions, burning through computational resources and fatiguing developers along the way. This may also force frequent asset re-baking or re-creation, further compounding the inefficiencies of memory management and processing bandwidth.

As the foregoing illustrates, what is needed in the art are more effective techniques for resolving distinct character definitions in virtual, animated environments.

### SUMMARY

One embodiment sets forth a method for retargeting character parameters to simplify stack processing for a 3D environment. According to some embodiments, the method includes the steps of selecting a character modifier to apply to characterization data for a particular character associated with a virtual environment; determining that a particular parameter, that is subject to modification upon an execution of the character modifier, is unavailable for the particular character; determining that other characterization data for a separate character includes an available parameter that is modifiable according to the character modifier; generating, for the particular character, updated characterization data that references the available parameter; modifying the updated characterization data according to the character modifier; and causing the particular character to exhibit a transition according to the character modifier while the particular character is being rendered via at least one user interface.

Other embodiments of the present disclosure include, without limitation, one or more computer-readable media including instructions for performing one or more aspects of the disclosed techniques as well as a computing device for performing one or more aspects of the disclosed techniques.

One technical advantage of the disclosed techniques over the prior art is that the disclosed techniques provide an efficient system for retargeting characterization data for unifying instances of characterization data for a virtual environment. In particular, such retargeting facilitates reuse of character libraries and other existing animation data, saving production time and ensuring uniform results across scenes. For instance, when a character pose is modified using retargeted characterization data, computational overhead can be reduced as a result avoiding repetitive calculations that might otherwise be performed when these techniques are not available.

In addition, once an instance of characterization data has been at least temporality retargeted, applying a character modifier to particular parameters of the updated characterization data can eliminate destructive workflows for designers. This modular approach for effectuating character transitions can reduce processing delays that might otherwise be exhibited when characterization data is modified without regard to contents of available characterization data. Thus, the techniques detailed herein can reduce downtimes for users while increasing available processing bandwidth at affected devices, at least compared to those users and devices employing prior art approaches.

Yet another technical advantage is that retargeting can reduce or simplify computational loads for application modules tasked with resolving relationships between objects in a virtual environment (e.g., when generating frame data or rendering an animation). When character stacks are modified to incorporate retargeting operations, CPU and GPU loads can also be preserved for other downstream tasks involved in virtual environment design. Designers can then focus more on creative design tasks and minimize time spent manually correcting errors or inconsistencies that may be apparent via a viewport of a design application. Reducing the number of manual corrections of errors in this way can preserve power and computational resources across an enterprise, especially when a number of designers are collaborating to create a virtual environment with complex character interactions (e.g., crowd animations).

Further, with the disclosed techniques, increased application responsiveness and improved accuracy for character movements can be realized over what can be achieved using prior art approaches, thereby streamlining 3D design processes while preserving computational resources.

These technical advantages provide one or more technological advancements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates software infrastructure configured to implement one or more aspects of various embodiments.
Figure 2 is a conceptual illustration of an architecture and an informational flow that can be implemented by the management server of Figure 1, according to various embodiments.
Figures 3 illustrates a conceptual diagram of characterization data parameters being retargeted at the direction of a software application executing on one of the endpoint devices of Figure 1, according to various embodiments.
Figure 4 illustrates a method for retargeting characterization data for characters in a virtual environment for efficiently applying modifications across a multicharacter environment, according to various embodiments.
Figure 5 is a more detailed illustration of a computing device that can implement the functionalities of the entities illustrated in Figure 1, according to various embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

### System Overview

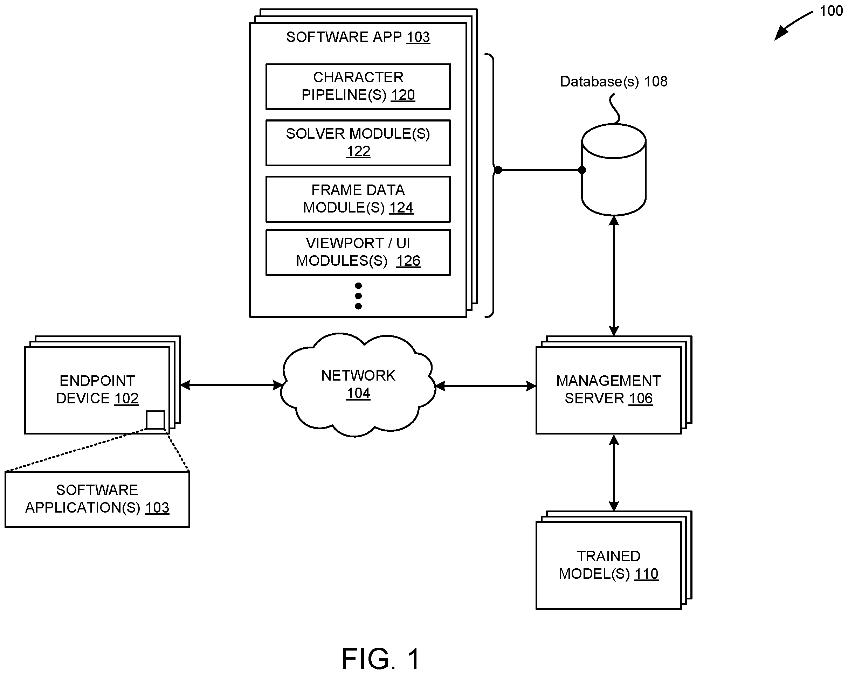

Figure 1 is a conceptual illustration of a system 100 configured to implement one or more aspects of the various embodiments. As shown, the system 100 includes at least one endpoint device 102, at least one management server 106, at least one database 108, and, optionally, at least one trained model 110, each of which can be available via a communications network 104. The communications network 104 can represent, for example, any technically feasible network or number of networks, including a wide area network (WAN) such as the Internet, a local area network (LAN), a Wi-Fi network, a cellular network, or a combination thereof.

The endpoint device 102 can represent a computing device (e.g., a desktop computing device, a laptop computing device, a mobile computing device, etc.). As shown in Figure 1, at least one software application 103 can be installed and executable on the endpoint device 102. The software application 103 can represent, for example, one or more of a design application, a design application plugin, web browser application, a web browser extension, a productivity application, or the like. The software application 103 can interface with the management server 106 and/or a separate application to access character pipeline(s) 120 and solver module(s) 122, which can be managed by the management server 106 (and/or other entities not illustrated in Figure 1).

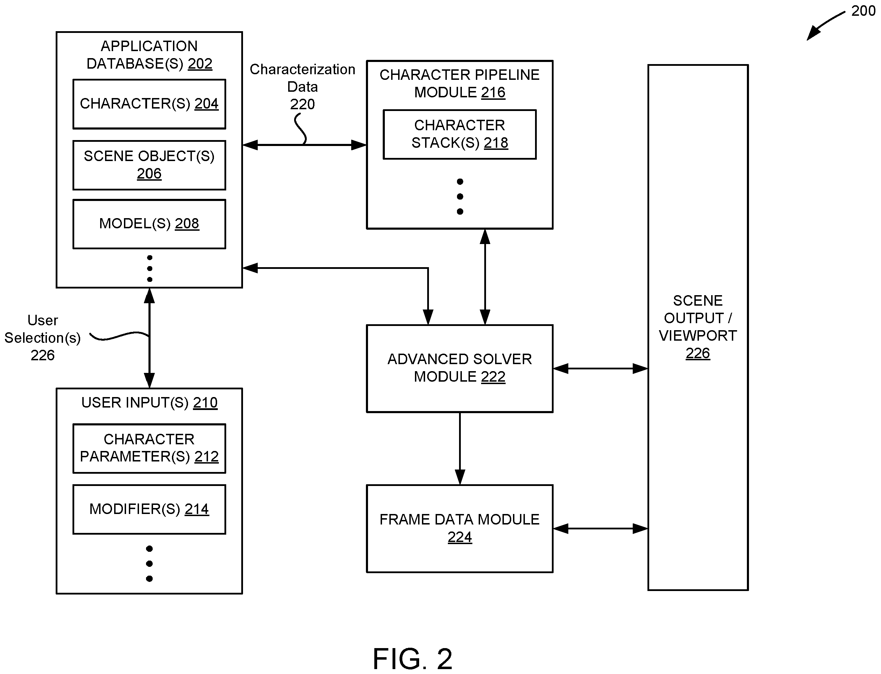

The management server 106 can interface with one or more databases 108 that are implemented by the management server 106 (and/or other entities not illustrated in Figure 1). The management server 106 can represent a computing device (e.g., a rack server, a blade server, a tower server, etc.). In some embodiments, the database(s) 108 can include, at least one software application 103, one or more character pipelines 120 operated in association with the software application 103, one or more solver modules 122 associated with the software application 103, one or more frame data modules 124, and one or more viewport / UI modules 126 (and other information and/or modules associated with the software application 103), the details of which are described below in greater detail in conjunction with Figures 2-4.

A user can engage the software app 103 by interacting with a viewport / UI module 126 of the software application 103. The viewport / UI module 126 can facilitate user input (e.g., using voice-based inputs, text-based inputs, etc.) selections for different virtual characters (i.e., rigs) to be included in an animated or virtual scene that the user is creating using the software application 103. In some embodiments, the software application 103 can facilitate user selection of how each character will be modified at the character pipeline(s) 120. When a user selects a particular character to undergo a modification during playback of an animation, the software application 103 can determine whether the particular character is suitable for retargeting, or is already associated with unified parameters (e.g., by activating a modifier stack or initializing one or more other operations). In some implementations, character data can be imported (e.g., from local and/or non-local storage) to the software application 103 for creating an animated and/or virtual scene.

Retargeting, as further detailed herein, can involve correlating certain character parameters of the particular character with existing, unified parameters. Retargeting, can alternatively or additional involve supplementing character data with the existing unified parameters, at least when such unified parameters are not already correlated to the particular character. During retargeting, the management server 106 can access the database(s) 108 and the trained model(s) 110 to leverage existing parameter data or models to efficiently retarget or supplement parameters for the particular character. Alternatively, or additionally, one or more heuristic processes can be utilized to retarget or supplement parameters for the particular character, as further detailed herein.

As described above, the management server 106 can be configured to facilitate at least a temporary unification of characters and/or their respective parameters for efficiently operating character stacks developed by a user via the endpoint device 102. By unifying certain character data for character modification, character stacks can be more efficiently processed, while also creating more accurate and consistent character translations and movements across frames of an associated animation or other rendered output. For instance, a user can select a modifier (e.g., "look_at_Object()") via an interface of the endpoint device 102 for a particular character object (e.g., a pedestrian in a crowd). In response, the management server 106 can access the database 108 to determine any unified parameters (e.g., bone labels, bone hierarchies, and the like) to be modified by the selected modifier. When such unified parameters are not already stored in association with the selected character, the management server 106 can identify available unified parameters for another character and retarget the existing parameters of the selected character accordingly.

When the user selects the modifier for the particular character, and the appropriate parameters (e.g., parameters subject to the selected modifier) are retargeted, the character pipeline 120 can be appended for applying the modifier. The modifier can then be applied to the retargeted parameters for the particular character to effectuate the corresponding modification (e.g., turning part of the character's body to look at a particular object). As a result of the modification, characterization data can be generated for characterizing a modified pose of the particular character.

In some embodiments, the characterization data can be available to the solver module(s) 122 for performing other calculations to determine and resolve issues the modified character pose may have in a current scene or animation, as further detailed herein. Tasks such as inverse kinematics (e.g., performed using Autodesk^{®} Human-IK^{®} or other inverse kinematics tools at management server 106 or other local or non-local device), collision detection, enforcing biomechanical limitations, and the like, can be performed by the solver module(s) 122 to ensure the particular character exhibits realistic movement in a scene. The frame data module(s) 124 can then receive any additional characterization data from the solver module(s) 122 for generating and writing any corresponding frame data to the database(s) 108. In some embodiments, and with confirmation from the user and/or other manual input from the user (e.g., when relatively non-standard naming is employed), the characterization data can also be utilized to further train any trained model(s) 110, as further detailed herein. A more detailed explanation of the functionality of the management server 106 and software app 103 is provided below in conjunction with Figures 2-4.

It will be appreciated that the endpoint device 102, the management server 106, the database 108, and the trained model(s) 110 described in conjunction with Figure 1 are illustrative, and that variations and modifications are possible. The connection topologies, including the number of processors and memories, may be modified as desired, and, in certain embodiments, one or more components shown in Figure 1 may not be present, or may be combined into fewer components. Further, in certain embodiments, one or more components shown in Figure 1 may be implemented as virtualized resources in one or more virtual computing environments and/or cloud computing environments. Further, in certain embodiments, one or more components shown in Figure 1 may be implemented exclusively at the endpoint device 102, without relying on the network 104, or without relying on some or all components being provided via the network topology illustrated in Figure 1.

### Proactively Retargeting Character Parameters for Selected Modifiers

Figure 2 is a conceptual illustration of an architecture and an informational flow that can be implemented by the management server 106 of Figure 1, according to various embodiments. The architecture provided in view 200 of Figure 1 can include an application database(s) 202 for storing and retrieving data associated with characters 204 and/or scene objects 206. When a user is interacting with an application, such as the software application 103, the user can provide user inputs 210 for selecting character parameters 212 and/or modifiers 214 for the characters 204. As a user provides certain user selections 226, data associated with the characters 204 (e.g., data characterizing how a character's bones will respond to a collision with a different character) can be updated at a corresponding application database 202, such as the database(s) 108 shown in Figure 1.

When a character is imported into a particular environment being created by the user, an imported character may be characterized by characterization data 220 that differs in structure and/or hierarchy relative to characterization data 220 for other characters in the environment. This can also occur for original characters created via the software application 103. Therefore, because characterization data 220 for each respective character of the environment can be frequently retrieved for applying modifiers and rendering frames, providing uniformity during processing of such characterization data 220 can optimize resource usage. For instance, when a user selects a modifier 214 to apply to a particular character 204 that was imported from, or otherwise created in, a different application, characterization data 220 for that particular character may be at least temporarily retargeted to realize such uniformity. In some embodiments, importing or otherwise creating a character that has not been subject to retargeting can cause the software application 103 to proactively initialize a retargeting process (e.g., via one or more plug-ins, or other suitable module(s)).

In some embodiments, a user can access a GUI of the software application 103 to interact with characterization data 220 for a particular character. The characterization data 220 can include parameters, and/or can reveal missing parameters, that are associated with a unified character definition or associated with a modifier 214 to be applied to the particular character. When such parameters are not available or otherwise linked to the particular character, a character pipeline module 216 can be invoked to update a character stack 218 for that particular character 204. The character stack 218 can be updated to include tasks (e.g., collision detection) or other operations to be executed for modifying and/or linking parameters into a definition for the particular character 204. Proactively appending the character stack 218 in this way can mitigate delay times when a user subsequently selects a modifier 214 to be applied to the particular character 204. When the modifier 214 is subsequently employed, retargeting can be performed per the proactive character stack 218 operation, and the modifier 214 can be applied to the retargeted character parameters. The resulting characterization data 220 can then be written back to the appropriate application database 202 for that particular character 204 (e.g., as a new pose, replacement pose, final pose, etc.).

In some embodiments, retargeting parameters of a character 204 can be performed by referencing other characters 204 associated with the environment and/or otherwise available via the application database 202 or other network location. For example, a user can select a modifier 214 for a first character to cause the first character to avoid a scene object 206 in a particular scene or environment (e.g., using a stepoverObject() modifier). In response, the software application 103 can determine whether an existing second character has undergone the same modification and/or is otherwise associated with any character parameters affected by the selected modifier 214. When affected parameters are identified for a second character, characterization data 220 can be appended and/or otherwise modified to include or reference those parameters for effectuating the selected modifier 214. This application operation can be performed according to a character pipeline for the first character, and can optionally involve appending an operation to another character pipeline for the second character, or otherwise retrieving parameter data from an application database 202.

In some embodiments, retargeting can involve employing one or more heuristic processes and/or one or more trained machine learning models 208. For example, certain parameters of a second character previously affected by a modifier can 214 can be processed to generate one or more embeddings that can be mapped to a latent space. Existing parameters for the first character can also be processed to generate other embeddings that can then be mapped to the latent space. Distances between the embeddings for the first character and the second character can then be determined and optionally compared to a threshold. When the latent distances between embeddings for certain parameters satisfy one or more thresholds, certain character parameters of the first character can be determined to correspond to the parameters of the second character that are appropriate for the selected modifier 214. The selected modifier 214 can then be executed for modifying the certain character parameters of the first character, because those parameters exhibit a threshold similarity to parameters that have already been subject to the selected modifier 214 (e.g., "left_arm[]" having a threshold similarity to "left_arm_bone[]").

In some instances, the existing parameters for the first character may not be available or otherwise determined to have a threshold relevance to the affected parameters of the second character. Under these circumstances, the characterization data 220 for the first character can be appended or otherwise modified to include or reference the parameters determined to be subject to the selected modifier 214 (e.g., lower body hierarchy data, ankle bone parameters, and the like). In some embodiments, modifying the characterization data 220 in this way can involve automatic processes performed via the character pipeline for the first character, and/or manual inputs from the user. For example, in response to determining that the first character does not include certain parameters for effectuating the selected modifier 214, the software application 103 can cause an interface of a computing device to render a notification for the user. The notification can solicit the user to modify a character definition for the first character using one or more application interfaces of the software application 103. For example, the user can provide manually types inputs, menu selections, and/or other inputs for causing characterization data 220 for the first character to be modified to include or be linked to the appropriate parameters (e.g., new skeleton definitions) for effectuating the selected modifier 214.

When the selected modifier 214 has been applied to the characterization data 220, updated characterization data can be written into the database 202. In some instances, this updated characterization data can characterize a subsequent or final pose of the affected character, at least relative to the characterization data 220 that was initially retrieved (e.g., initially characterizing an initial pose). These instances of characterization data 220 for the characters 204 in a scene can be accessed by an advanced solver module 222 to solve for any adjustments that be made for any of the characters 204, scene objects 206, and/or other constraints for the scene. In some instances, advanced solver module 222 can process instances of characterization data 220 from the application database(s) 202 through the character pipeline 216 for the appropriate characters 204. For example, the advanced solver module 222 can resolve issues that may be apparent for certain scenes where the characterization data 220 for a character 204 remains unchanged (e.g., lower bones responding to object but upper bones remain static).

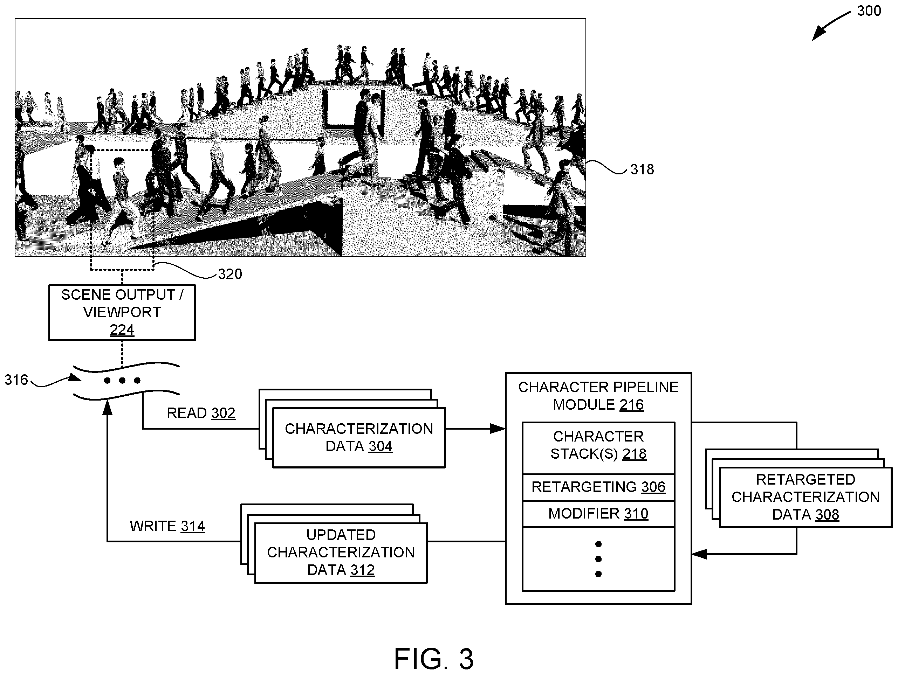

In some embodiments, the advanced solver module 222 can communicate with a scene output / viewport 226 of the architecture for the software application 226. Frame data generated by a frame data module 224 can also be available to the scene output / viewport 226, thereby allowing the user to visualize the animation being created according to the user inputs 210. In some embodiments, the frame data module 224 can receive data from the advanced solver module 222 for generating frame data that can be converted to other file formats. In some instances, a user can optionally interact with the viewport 226 to make adjustments to characters 204, scene objects 206, and/or other data that is accessible via the software application 103. For example, a user can manipulate a location of the first character to cause the first character to be more proximate to a particular object or other obstacle in a virtual environment. As a result, the viewport 226 can communicate such modifications to the advanced solver module 222 and/or the character pipeline module 216 to effectuate any modifiers that may be relevant to the relocation, object, or obstacle. When modifiers 214 relevant to the obstacle or object are directed to modifying the parameters newly appended to, or referenced by, the updated characterization data 220 for the first character, the retargeting process may be bypassed. As a result, the software application 103 can make real-time adjustments to the first character without duplicating code or other processes. This can preserve significant processing bandwidth and memory, especially for complex environments, such as the environment illustrated in Figure 3. For instance, character pipelines can be simplified over time for the environment, the software application 103, and/or any other entity that regularly utilizes such software applications 103. As a result, devices operating to those character pipelines can realize reduced power consumption, thereby allowing such power to utilized at other powerintensive operations (e.g., further training models 208 and/or processing data using the models 208).

Figures 3 illustrates a view 300 of a conceptual diagram of a user interface associated with a software application 103 executing on one of the endpoint devices 102 of Figure 1, according to various embodiments. As shown in Figure 3, characterization data 304 associated with a frame 318 can be received at the character stack 218 of the character pipeline module 216. The characterization data 304 can optionally be stored in association with one or more characters 320 that can be viewed via a scene output / viewport 226 of an application, such as the software application 103.

As illustrated in Figure 3, a read 302 operation can be performed to retrieve certain characterization data 304 that can be subject to a modifier 310 selected by a user and/or by the software application 103. In some embodiments, the read 302 operation can be performed to retrieve certain characterization data 304 without a modifier 310 being initially provided in the corresponding stack. In some instances, when characterization data 304 is ingested from another application or environment, the software application 103 can proactively perform retargeting 306 to unify the corresponding imported character with other characters in the environment. As represented by the ellipses 316, multiple other character stacks and modules may be implemented by the software application 103 to facilitate sharing of characterization data between different characters.

When the character stack 218 of Figure 3 is appended to include at least the retargeting 306 operation, retargeted characterization data 308 can be generated. Retargeting the characterization data 304 in this way can facilitate the reuse of available animation libraries and improve the accuracy of the modifier 310 operation. For instance, the modifier 310 operation can correspond to a "look-at()" modifier that can introduce constraints and/or delineate character pose adjustments (e.g., human head or other appendage movement limitations for a virtual person). These adjustments can be made to the retargeted characterization data 308 to characterize a pose or movement that is consistent with suitable biological limitations for a corresponding character 320. Because the original characterization data 304 may not have included the appropriate parameters (e.g., content characterizing biological constraints, bone hierarchies, and the like) to be modified upon an execution of the modifier 310, the retargeting 306 operation is performed. As a result, the appropriate parameters may be at least temporarily included in, or referenced by, the retargeted character data 308 in furtherance of applying the modifier 310 to the appropriate referenced parameters. Thereafter, the updated characterization data 312 can be generated to reflect the adjustments made to those parameters.

As further illustrated in Figure 3, the updated characterization data 312 can be subject to a write 314 operation for incorporating the updated characterization data 312 into an environment or scene being designed. In some embodiments, further processing may be performed on the retargeted characterization data 308 and/or the updated characterization data 312 to resolve issues that may be apparent to other modules of the software application 103. Nonetheless, the retargeting 306 operation can ensure that further processing for an affected character will be performed according to a unified system, as detailed herein. Efficiencies realized by these modular retargeting techniques can include memory preservation, CPU and GPU load reduction, and improved application responsiveness. These efficiencies can be further realized when variations in character definitions are unified across all character stacks, thereby reducing the number of inconsistencies apparent during downstream design tasks.

It is noted that the diagram illustrated in Figure 3 is not meant to be limiting, and that instances of characterization data can be available with, or be modified to include, any amount, type, form, etc., of UI element(s), at any level of granularity, consistent with the scope of this disclosure.

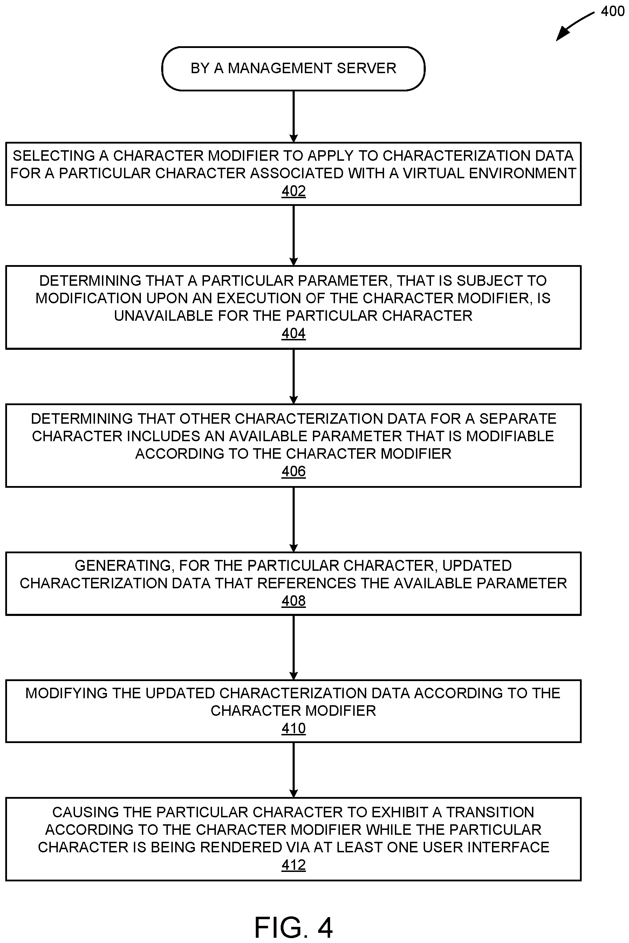

Figure 4 illustrates a method 400 for retargeting characterization data parameters for a character to be included in a virtual environment, according to various embodiments. As shown in Figure 4, the method begins at a step 402 of selecting a character modifier to apply to characterization data for a particular character associated with the virtual environment (e.g., as described above in conjunction with Figures 1-3). At step 404, the management server 106 determines that a particular parameter, which is subject to modification upon execution of the character modifier, is unavailable for the particular character (e.g., as described above in conjunction with Figures 1-3).

At step 406, the management server 106 determines that other characterization data for a separate character includes an available parameter that is modifiable according to the character modifier (e.g., as described above in conjunction with Figures 1-3). At step 408, the management server 106 generates, for the particular character, updated characterization data that references the available parameter (e.g., as described above in conjunction with Figures 1-3).

At step 410, the management server 106 modifies the updated characterization data according to the character modifier. At step 412, the management server 106 causes the particular character to exhibit a transition based on the updated characterization data while the particular character is being rendered via at least one user interface (e.g., as described above in conjunction with Figures 1-3).

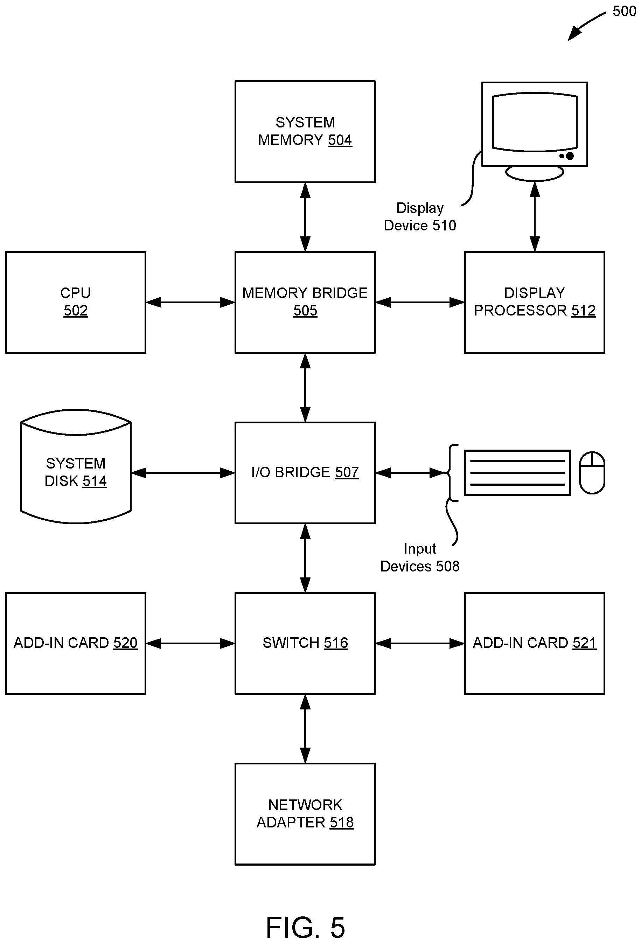

Figure 5 is a more detailed illustration of a computing device that can implement the functionalities of the entities illustrated in Figure 1, according to various embodiments. This figure in no way limits or is intended to limit the scope of the various embodiments. In various implementations, system 500 may be an augmented reality, virtual reality, or mixed reality system or device, a personal computer, video game console, personal digital assistant, mobile phone, mobile device or any other device suitable for practicing the various embodiments. Further, in various embodiments, any combination of two or more systems 500 may be coupled together to practice one or more aspects of the various embodiments.

As shown, system 500 includes a central processing unit (CPU) 502 and a system memory 504 communicating via a bus path that may include a memory bridge 505. CPU 502 includes one or more processing cores, and, in operation, CPU 502 is the master processor of system 500, controlling and coordinating operations of other system components. System memory 504 stores software applications and data for use by CPU 502. CPU 502 runs software applications and optionally an operating system. Memory bridge 505, which may be, e.g., a Northbridge chip, is connected via a bus or other communication path (e.g., a HyperTransport link) to an I/O (input/output) bridge 507. I/O bridge 507, which may be, e.g., a Southbridge chip, receives user input from one or more user input devices 508 (e.g., keyboard, mouse, joystick, digitizer tablets, touch pads, touch screens, still or video cameras, motion sensors, and/or microphones) and forwards the input to CPU 502 via memory bridge 505.

A display processor 512 is coupled to memory bridge 505 via a bus or other communication path (e.g., a PCI Express, Accelerated Graphics Port, or HyperTransport link); in one embodiment display processor 512 is a graphics subsystem that includes at least one graphics processing unit (GPU) and graphics memory. Graphics memory includes a display memory (e.g., a frame buffer) used for storing pixel data for each pixel of an output image. Graphics memory can be integrated in the same device as the GPU, connected as a separate device with the GPU, and/or implemented within system memory 504.

Display processor 512 periodically delivers pixels to a display device 510 (e.g., a screen or conventional CRT, plasma, OLED, SED or LCD based monitor or television). Additionally, display processor 512 may output pixels to film recorders adapted to reproduce computer generated images on photographic film. Display processor 512 can provide display device 510 with an analog or digital signal. In various embodiments, one or more of the various graphical user interfaces set forth in Figure 3 are displayed to one or more users via display device 510, and the one or more users can input data into and receive visual output from those various graphical user interfaces.

A system disk 514 is also connected to I/O bridge 507 and may be configured to store content and applications and data for use by CPU 502 and display processor 512. System disk 514 provides non-volatile storage for applications and data and may include fixed or removable hard disk drives, flash memory devices, and CD-ROM, DVD-ROM, Blu-ray, HD-DVD, or other magnetic, optical, or solid state storage devices.

A switch 516 provides connections between I/O bridge 507 and other components such as a network adapter 518 and various add-in cards 520 and 521. Network adapter 518 allows system 500 to communicate with other systems via an electronic communications network, and may include wired or wireless communication over local area networks and wide area networks such as the Internet.

Other components (not shown), including USB or other port connections, film recording devices, and the like, may also be connected to I/O bridge 507. For example, an audio processor may be used to generate analog or digital audio output from instructions and/or data provided by CPU 502, system memory 504, or system disk 514. Communication paths interconnecting the various components in Figure 5 may be implemented using any suitable protocols, such as PCI (Peripheral Component Interconnect), PCI Express (PCI-E), AGP (Accelerated Graphics Port), HyperTransport, or any other bus or point-to-point communication protocol(s), and connections between different devices may use different protocols, as is known in the art.

In one embodiment, display processor 512 incorporates circuitry optimized for graphics and video processing, including, for example, video output circuitry, and constitutes a graphics processing unit (GPU). In another embodiment, display processor 512 incorporates circuitry optimized for general purpose processing. In yet another embodiment, display processor 512 may be integrated with one or more other system elements, such as the memory bridge 505, CPU 502, and I/O bridge 507 to form a system on chip (SoC). In still further embodiments, display processor 512 is omitted and software executed by CPU 502 performs the functions of display processor 512.

Pixel data can be provided to display processor 512 directly from CPU 502. In some embodiments, instructions and/or data representing a scene are provided to a render farm or a set of server computers, each similar to system 500, via network adapter 518 or system disk 514. The render farm generates one or more rendered images of the scene using the provided instructions and/or data. These rendered images may be stored on computer-readable media in a digital format and optionally returned to system 500 for display. Similarly, stereo image pairs processed by display processor 512 may be output to other systems for display, stored in system disk 514, or stored on computer-readable media in a digital format.

Alternatively, CPU 502 provides display processor 512 with data and/or instructions defining the desired output images, from which display processor 512 generates the pixel data of one or more output images, including characterizing and/or adjusting the offset between stereo image pairs. The data and/or instructions defining the desired output images can be stored in system memory 504 or graphics memory within display processor 512. In an embodiment, display processor 512 includes 3D rendering capabilities for generating pixel data for output images from instructions and data defining the geometry, lighting shading, texturing, motion, and/or camera parameters for a scene. Display processor 512 can further include one or more programmable execution units capable of executing shader programs, tone mapping programs, and the like.

Further, in other embodiments, CPU 502 or display processor 512 may be replaced with or supplemented by any technically feasible form of processing device configured process data and execute program code. Such a processing device could be, for example, a central processing unit (CPU), a graphics processing unit (GPU), an application-specific integrated circuit (ASIC), a field-programmable gate array (FPGA), and so forth. In various embodiments any of the operations and/or functions described herein can be performed by CPU 502, display processor 512, or one or more other processing devices or any combination of these different processors.

CPU 502, render farm, and/or display processor 512 can employ any surface or volume rendering technique known in the art to create one or more rendered images from the provided data and instructions, including rasterization, scanline rendering REYES or micropolygon rendering, ray casting, ray tracing, image-based rendering techniques, and/or combinations of these and any other rendering or image processing techniques known in the art.

In other contemplated embodiments, system 500 may be a robot or robotic device and may include CPU 502 and/or other processing units or devices and system memory 504. In such embodiments, system 500 may or may not include other elements shown in Figure 5. System memory 504 and/or other memory units or devices in system 500 may include instructions that, when executed, cause the robot or robotic device represented by system 500 to perform one or more operations, steps, tasks, or the like.

It will be appreciated that the system shown herein is illustrative and that variations and modifications are possible. The connection topology, including the number and arrangement of bridges, may be modified as desired. For instance, in some embodiments, system memory 504 is connected to CPU 502 directly rather than through a bridge, and other devices communicate with system memory 504 via memory bridge 505 and CPU 502. In other alternative topologies display processor 512 is connected to I/O bridge 507 or directly to CPU 502, rather than to memory bridge 505. In still other embodiments, I/O bridge 507 and memory bridge 505 might be integrated into a single chip. The particular components shown herein are optional; for instance, any number of add-in cards or peripheral devices might be supported. In some embodiments, switch 516 is eliminated, and network adapter 518 and add-in cards 520, 521 connect directly to I/O bridge 507.

In sum, the disclosed techniques provide a modular approach to applying character modifications to a diverse group of characters in an environment by facilitating parameter retargeting. Retargeting operations can be initialized proactively by a system and/or in response to a user input to the system, such as when a user selects to apply a character modifier to a particular character. A selection of a character modifier can be performed by a user who accesses an interface of the software application and identifies a particular adjustment to be made to the particular character. The character modifier can involve, for example, adjusting the posture of the particular character as the character rides in a vehicle in a virtual environment (e.g., in traffic on a virtual highway).

The selection of the character modifier can initialize a retargeting of certain parameters for the particular character, such as those parameters that may facilitate an accurate depiction of the particular character (e.g., limiting leg movement to an interior of a vehicle). Although such parameters may not be readily available for the particular character, one or more heuristic processes and/or machine learning models can be utilized by the system to determine whether another available character is associated with such parameters (e.g., another character in another vehicle within the virtual highway environment). This automated operation can include identifying the parameters of an available character whose data has already been modified according to the selected character modifier. Alternatively, or additionally, the operation can include comparing information for the selected character modifier to the particular character for determining whether certain parameters are not available in the characterization data for the particular character.

In some embodiments, when certain parameters are not available in, or reference by, the characterization data for the particular character, but they are available for a separate character, a retargeting operation can be initialized by the system. Retargeted characterization data can then be generated for providing a link or reference between the available parameters of the separate character and the current parameters for the particular character. Alternatively, or additionally, retargeted characterization data can be generated by appending parameters or other values (e.g., leg or other appendage movement limitations for a virtual person in virtual vehicle) to the current characterization data for the particular character.

When the retargeted characterization data has been generated, the character modifier can be executed and updated characterization data can be generated by the system. This updated characterization data can then be utilized by other modules of the system and/or further processed for resolving any conflicts the updated characterization data may have with the virtual environment and/or virtual objects within the virtual environment. Such processing may involve the system soliciting a user for further input to resolve outstanding issues (e.g., issues between virtual persons in the vehicle with the particular character), though such inputs may be few when retargeting has already been performed for a number of characters in the virtual environment.

One technical advantage of the disclosed techniques over the prior art is that the disclosed techniques provide an efficient system for retargeting characterization data for unifying instances of characterization data for a virtual environment. In particular, such retargeting facilitates reuse of character libraries and other existing animation data, saving production time and ensuring uniform results across scenes. For instance, when a character pose is modified using retargeted characterization data, computational overhead can be reduced as a result avoiding repetitive calculations that might otherwise be performed when these techniques are not available.

In addition, once an instance of characterization data has been at least temporality retargeted, applying a character modifier to particular parameters of the updated characterization data can eliminate destructive workflows for designers. This modular approach for effectuating character transitions can reduce processing delays that might otherwise be exhibited when characterization data is modified without regard to contents of available characterization data. Thus, the techniques detailed herein can reduce downtimes for users while increasing available processing bandwidth at affected devices, at least compared to those users and devices employing prior art approaches.

Yet another technical advantage is that retargeting can reduce or simplify computational loads for application modules tasked with resolving relationships between objects in a virtual environment (e.g., when generating frame data or rendering an animation). When character stacks are modified to incorporate retargeting operations, CPU and GPU loads can also be preserved for other downstream tasks involved in virtual environment design. Designers can then focus more on creative design tasks and minimize time spent manually correcting errors or inconsistencies that may be apparent via a viewport of a design application. Reducing the number of manual corrections of errors in this way can preserve power and computational resources across an enterprise, especially when a number of designers are collaborating to create a virtual environment with complex character interactions (e.g., crowd animations).
1. In some embodiments, a computer-implemented method for applying character modifications to characters in a virtual environment comprises selecting a character modifier to apply to characterization data for a particular character associated with the virtual environment; determining that a particular parameter, that is subject to modification upon an execution of the character modifier, is unavailable for the particular character; determining that other characterization data for a separate character includes an available parameter that is modifiable according to the character modifier; generating, for the particular character, updated characterization data that references the available parameter; modifying the updated characterization data according to the character modifier; and causing the particular character to exhibit a transition according to the character modifier while the particular character is being rendered via at least one user interface.
2. The computer-implemented method of clause 1, wherein: the character modifier corresponds to an application operation for modifying an initial pose of the particular character in the virtual environment, and the transition corresponds to the particular character transitioning from the initial pose to a final pose.
3. The computer-implemented method of clause 1 or 2, further comprising, prior to determining that the other characterization data for the separate character includes the available parameter that is modifiable according to the character modifier, processing the other characterization data using one or more trained machine learning models.
4. The computer-implemented method of any preceding clause, wherein selecting the character modifier to apply to characterization data for the particular character is performed in response to a user input, or in response to an automated operation of an application that is providing access to the characterization data.
5. The computer-implemented method of any preceding clause, further comprising, prior to generating the updated characterization data, modifying an existing parameter of the characterization data to include content of the available parameter, or to include a reference to the available parameter.
6. The computer-implemented method of clause 5, wherein the particular character corresponds to a virtual person in the virtual environment and the existing parameter characterizes a feature of an appendage of the virtual person.
7. The computer-implemented method of clause 6, further comprising, prior to causing the particular character to exhibit the transition according to the character modifier, generating frame data that characterizes frames depicting the transition of the particular character between an initial pose and a final pose.
8. The computer-implemented method of any preceding clause, wherein generating the updated characterization data that references the available parameter for the particular character includes storing the available parameter within the characterization data or storing a reference to the available parameter within the characterization data.
9. The computer-implemented method of any preceding clause, wherein determining the particular parameter is unavailable for the particular character is performed prior to selecting the character modifier to apply to the characterization data.
10. The computer-implemented method of any preceding clause, wherein the character modifier corresponds to a movement constraint for the particular character.
11. In some embodiments, one or more non-transitory computer readable media store instructions that, when executed by one or more processors, cause the one or more processors to retarget characterization data for a character in a virtual environment, by performing the operations of selecting a character modifier to apply to characterization data for a particular character associated with the virtual environment; determining that a particular parameter, that is subject to modification upon an execution of the character modifier, is unavailable for the particular character; determining that other characterization data for a separate character includes an available parameter that is modifiable according to the character modifier; generating, for the particular character, updated characterization data that references the available parameter; modifying the updated characterization data according to the character modifier; and causing the particular character to exhibit a transition according to the character modifier while the particular character is being rendered via at least one user interface.
12. The one or more non-transitory computer readable media of clause 11, wherein the character modifier corresponds to a movement of the particular character relative to a scene object that is rendered, with the particular character and the separate character, via at least one user interface.
13. The one or more non-transitory computer readable media of any of clauses 11 or 12, wherein the operations further include, prior to selecting the character modifier to apply to the characterization data for the particular character, receiving a user input that identifies the character modifier for causing the particular character to move relative to a scene object in the virtual environment.
14. The one or more non-transitory computer readable media of any of clauses 11 to 13, wherein the characterization data is imported from a separate application that is different from an application that renders the one or more user interfaces.
15. The one or more non-transitory computer readable media of any of clauses 11 to 14, wherein the operations further include, prior to determining that the other characterization data for the separate character includes the available parameter that is modifiable according to the character modifier, processing the other characterization data using a trained machine learning model that is trained based on different instances of characterization data.
16. The one or more non-transitory computer readable media of any of clauses 11 to 15, wherein the operations further include, prior to generating the updated characterization data, modifying an existing parameter of the characterization data to include content of the available parameter, or to include a reference to the available parameter.
17. The one or more non-transitory computer readable media of clause 16, wherein the particular character corresponds to a virtual person in the virtual environment and the existing parameter characterizes a feature of an appendage of the virtual person.
18. The one or more non-transitory computer readable media of clause 17, wherein the operations further include, prior to causing the particular character to exhibit the transition according to the character modifier, generating frame data that characterizes frames depicting the transition of the particular character between an initial pose and a final pose.
19. The one or more non-transitory computer readable media of any of clauses 11 to 18, wherein generating updated characterization data that references the available parameter for the particular character includes storing the available parameter within the characterization data or storing a reference to the available parameter within the characterization data.
20. In some embodiments, a computer system comprises one or more memories that include instructions, and one or more processors that are coupled to the one or more memories and that, when executing the instructions, are configured to apply character modifications to characters of a virtual environment, by performing the operations of selecting a character modifier to apply to characterization data for a particular character associated with a virtual environment; determining that a particular parameter, that is subject to modification upon an execution of the character modifier, is unavailable for the particular character; determining that other characterization data for a separate character includes an available parameter that is modifiable according to the character modifier; generating, for the particular character, updated characterization data that references the available parameter; modifying the updated characterization data according to the character modifier; and causing the particular character to exhibit a transition according to the character modifier while the particular character is being rendered via at least one user interface.
21. The computer system of clause 20 wherein the one or more memories that include instructions, and the one or more processors that are coupled to the one or more memories when executing the instructions, are configured to carry out the method of any of clauses 1 to 10.

Any and all combinations of any of the claim elements recited in any of the claims and/or any elements described in this application, in any fashion, fall within the contemplated scope of the present disclosure and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The invention has been described above with reference to specific embodiments. Persons of ordinary skill in the art, however, will understand that various modifications and changes may be made thereto without departing from the broader spirit and scope of the invention as set forth in the appended claims. For example, and without limitation, although many of the descriptions herein refer to specific types of I/O devices that may acquire data associated with an object of interest, persons skilled in the art will appreciate that the systems and techniques described herein are applicable to other types of I/O devices. The foregoing description and drawings are, accordingly, to be regarded in an illustrative rather than a restrictive sense.

While the preceding is directed to embodiments of the present disclosure, other and further embodiments of the disclosure may be devised without departing from the basic scope thereof, and the scope thereof is determined by the claims that follow.

## Claims

1. A computer-implemented method for applying character modifications to characters in a virtual environment, the method comprising:
selecting a character modifier to apply to characterization data for a particular character associated with the virtual environment;
determining that a particular parameter, that is subject to modification upon an execution of the character modifier, is unavailable for the particular character;
determining that other characterization data for a separate character includes an available parameter that is modifiable according to the character modifier;
generating, for the particular character, updated characterization data that references the available parameter;
modifying the updated characterization data according to the character modifier; and
causing the particular character to exhibit a transition according to the character modifier while the particular character is being rendered via at least one user interface.

2. The computer-implemented method of claim 1, wherein:
the character modifier corresponds to an application operation for modifying an initial pose of the particular character in the virtual environment, and
the transition corresponds to the particular character transitioning from the initial pose to a final pose.

3. The computer-implemented method of claim 1 or 2, further comprising, prior to determining that the other characterization data for the separate character includes the available parameter that is modifiable according to the character modifier, processing the other characterization data using one or more trained machine learning models.

4. The computer-implemented method of any preceding claim, wherein selecting the character modifier to apply to characterization data for the particular character is performed in response to a user input, or in response to an automated operation of an application that is providing access to the characterization data.

5. The computer-implemented method of any preceding claim, further comprising, prior to generating the updated characterization data, modifying an existing parameter of the characterization data to include content of the available parameter, or to include a reference to the available parameter.

6. The computer-implemented method of claim 5, wherein the particular character corresponds to a virtual person in the virtual environment and the existing parameter characterizes a feature of an appendage of the virtual person.

7. The computer-implemented method of claim 6, further comprising, prior to causing the particular character to exhibit the transition according to the character modifier, generating frame data that characterizes frames depicting the transition of the particular character between an initial pose and a final pose.

8. The computer-implemented method of any preceding claim, wherein generating the updated characterization data that references the available parameter for the particular character includes storing the available parameter within the characterization data or storing a reference to the available parameter within the characterization data.

9. The computer-implemented method of any preceding claim, wherein determining the particular parameter is unavailable for the particular character is performed prior to selecting the character modifier to apply to the characterization data.

10. The computer-implemented method of any preceding claim, wherein the character modifier
corresponds to a movement constraint for the particular character.

11. A computer program product comprising instructions that, when executed by one or more processors, cause the one or more processors to applying character modifications to characters in a virtual environment by performing the method of any preceding claim.

12. A computer system, comprising:
one or more memories that include instructions; and
one or more processors that are coupled to the one or more memories and, when executing the instructions, are configured to apply character modifications to characters in a virtual environment, by performing the method of any of claims 1 to 10.
